# EUROPEAN PATENT APPLICATION

(11) **EP 4 541 202 A1**
(43) Date of publication of application: **23.04.2025**
(21) Application number: 23823898.4
(22) Date of filing: 12.06.2023
(51) Int. Cl.: A23F 5/02, A23F 5/04, A23F 5/16, A23F 5/24

(54) **METHOD FOR REDUCING UNPLEASANT ODOR COMPONENT IN ROASTED COFFEE BEANS**

(30) Priority: 15.06.2022 JP 2022096697
(71) Applicant: Asahi Group Holdings, Ltd., Tokyo 130-8602 (JP)
(72) Inventor: INABA, Shiori, Moriya-shi, Ibaraki 302-0106 (JP); SUGAHARA, Hirosuke, Moriya-shi, Ibaraki 302-0106 (JP)
(74) Representative: J A Kemp LLP
(86) International application number: PCT/JP2023/021761
(87) International publication number: WO 2023/243608

(57) **Abstract**

The present invention provides a feature which suppresses the formation of indoles and scatoles, which are known to be an unpleasant odor component in roasted coffee beans, without heat-treating raw coffee beans to a high temperature of 100°C or higher. More specifically, the present invention moistens raw coffee beans with water and subjects the same to a heat treatment at a temperature less than 100°C at atmospheric pressure, causes the heat-treated raw coffee beans to absorb an organic acid and/or a saccharide, and thereafter, roasts the coffee beans.

## Description

### Technical Field

The present invention relates to a method for reducing an unpleasant odor component in coffee roasted beans. More specifically, the present invention provides a method for reducing an unpleasant odor component by water addition, heating and addition of an organic acid and/or a saccharide to green coffee beans, the unpleasant odor component being generated in a roasting step subsequent to the water addition, the heating and the addition of the organic acid and/or the saccharide.

### Background Art

Coffee is a preference beverage that is consumed all over the world, and coffee that is balanced in its aroma, sweetness, bitterness, and sourness is preferred. Coffee is a beverage that is so delicate that the only slight difference in conditions in the process of sorting, roasting, and extracting green coffee beans causes a significant difference in hundreds of components that determine taste, aroma, and richness.

Coffee includes three original species of Arabica, Robusta and Liberica. Arabica coffee is produced in Ethiopia, which is the country of origin, Central and South America such as Brazil and Columbia, Hawaii, and India, accounts for 70% or more of the world coffee production, is superior in flavor and sourness, and is known as high-quality coffee. Robusta coffee is produced in various places in Africa including Congo, which is the place of origin, Indonesia, and Trinidad and Tobago, accounts for about 30% of the world coffee production, has very high harvestability, and is used for instant coffee and canned coffee. It is considered that the quality of the Robusta coffee beans is inferior to that of the Arabica coffee beans because the Robusta coffee beans have an earthy and musty flavor note. Liberica coffee is produced in Republic of Liberia on the west coast of Africa, which is the place of origin, Cote d'Ivoire, Angola, Indonesia, and Liberia, account for only a few percent of the world coffee production, and is consumed almost exclusively in growing areas.

As a method for removing an earthy and musty flavor note of Robusta coffee beans and effectively improving the quality thereof, a method of improving the quality of Robusta coffee roasted beans by steam-treating moistened Robusta green coffee beans at a temperature of from 260 to 300°F (from about 126 to 149°C) under a pressure higher than the atmospheric pressure and roasting the treated beans is known (Patent Document 1). In this document, it is reported that 2-methylisoborneol seems to be the cause of the earthy and musty flavor note. As another method for improving the quality of coffee beans, a technique has been disclosed in which a saccharide or an amino acid is added to green coffee beans, and then heat treatment is performed under a pressure of the atmospheric pressure or more (for example, Patent Documents 2 and 3).

Patent Document 4 discloses a method of increasing a β-damascenone content in green coffee beans by a high-temperature and high-pressure treatment step of treating acid-treated green coffee beans in which an acidic solution is absorbed into coffee green beans, with a gas containing water vapor having a pressure (gauge pressure) exceeding 0 MPa at a temperature of from 100 to 200°C. By this method, it is possible to produce green coffee beans and roasted coffee beans having enhanced sweet aroma and improved flavor.

All of these methods are processing methods that require equipment capable of heating at a high temperature under pressure.

Thereafter, it has been confirmed that green coffee beans obtained from an immature fruit contain much tryptophan regardless of the variety of the coffee beans, the content thereof decreases as the maturation of the fruit progresses, and indole and skatole generated in a thermally decomposed product of tryptophan during roasting are unpleasant odor components of coffee (Patent Document 5). In Patent Document 5 is provided a method of obtaining roasted coffee beans having low contents of indole and skatole by selecting green coffee beans having a low tryptophan content by a near infrared method and using them as a raw material.

On the other hand, Patent Document 6 discloses a method for reducing odor components, which are considered to cause an unpleasant odor, such as indole and skatole in roasted coffee beans, by performing a step of pickling green coffee beans in sake lees and then roasting the green coffee beans.

In this method, it is considered that the contact of the green coffee beans with the sake lees is preferably performed in a temperature environment of from 0 to 30°C in order to inhibit the denaturation of the sake lees containing various components, and it is also considered that the alcohol content in a pickling liquid in which the green coffee beans are pickled is preferably from 0.5 to 4% by mass. It is also shown that the longer the time of pickling in the sake lees, and the greater the effect of reducing the unpleasant odor, and it is considered that the pickling time is particularly preferably 16 hours or more.

### Prior Art Documents

### Patent Documents

Patent Document 1:
   Japanese Patent Laid-open Publication No. H6(1994)-303905
Patent Document 2:
   Japanese Patent Laid-open Publication No. 2000-342182
Patent Document 3:
   Japanese Patent Laid-open Publication No. 2010-166868
Patent Document 4:
   Japanese Patent Laid-open Publication No. 2018-057369
Patent Document 5:
   Japanese Patent Laid-open Publication No. 2016-167993
Patent Document 6:
   Japanese Patent Laid-open Publication No. 2022-015956

### Non-Patent Documents

Non-Patent Document 1:
   Toshitaka Minetoki, Journal of the Brewing Society of Japan Vol. 109, No. 1, 11-20 (2014)
Non-Patent Document 2:
   Hiromitsu Osada, et al., Report of Toyo College of Food Technology and Toyo Institute of Food Technology, 20, 27-34 (1994)
Non-Patent Document 3:
   Mutsuko Takaya, et al., Research reports of Shokei Gakuin College, 60, 19-29, received on September 15, 2010

### Summary of the Invention

### Problems to be Solved by the Invention

The present invention provides a technique for inhibiting formation of indole and skatole, which are known as unpleasant odor components in roasted coffee beans, without subjecting green coffee beans to a heat treatment at a high temperature of 100°C or higher. Means for Solving the Problems

In the present invention, in outline, the formation of indole and skatole in roasted coffee beans is inhibited by, after water addition to green coffee beans, heating-treating the green coffee beans at a temperature lower than 100°C under atmospheric pressure to impregnate moisture into the green coffee beans, causing an organic acid or a saccharide to be absorbed to the green coffee beans impregnated with moisture, and then roasting the green coffee beans. Thereby, the content of indole and skatole in the roasted coffee beans is reduced more than the content of indole and skatole in the roasted coffee beans obtained by roasting unprocessed green coffee beans.

More specifically, the present invention provides the following techniques.
[1] A production method for producing roasted coffee beans, the method comprising:
   (1) a step of adding 10% by mass or more of moisture to green coffee beans;
   (2) a step of, after the step of adding the moisture, heating the green coffee beans and the moisture to a temperature lower than 100°C under atmospheric pressure to impregnate the green coffee beans with the moisture;
   (3) a step of, after the step of impregnating the green coffee beans with the moisture, causing an organic acid and/or a saccharide to be absorbed to the green coffee beans impregnated with the moisture; and
   (4) a step of, after the step of causing the organic acid and/or the saccharide to be absorbed, roasting the green coffee beans having absorbed the organic acid and/or the saccharide.
[2] The production method according to item 1, wherein in the step of causing the organic acid and/or the saccharide to be absorbed, the green coffee beans impregnated with the moisture are impregnated with an aqueous solution containing the organic acid and/or the saccharide.
[3] The production method according to item 1 or 2, wherein the organic acid is at least one selected from the group consisting of lactic acid, citric acid and acetic acid, and the saccharide is at least one selected from the group consisting of glucose, fructose, and maltose.
[4] The production method according to any one of items 1 to 3, wherein 0.5% by mass or more of the organic acid or the saccharide with respect to the green coffee beans is caused to absorbed.
[5] The production method according to any one of items 1 to 4, wherein the green coffee beans are Robusta.
[6] Roasted coffee beans produced by the production method according to any one of items 1 to 5.
[7] A food or beverage comprising the roasted coffee beans according to item 6 or an extract thereof.
[8] A method for reducing indole and skatole in roasted coffee beans, the method comprising:
   (1) a step of adding 10% by mass or more of moisture to green coffee beans;
   (2) a step of, after the step of adding the moisture, heating the green coffee beans and the moisture to a temperature lower than 100°C under atmospheric pressure to impregnate the green coffee beans with the moisture;
   (3) a step of, after the step of impregnating the green coffee beans with the moisture, causing an organic acid and/or a saccharide to be absorbed to the green coffee beans impregnated with the moisture; and
   (4) a step of, after the step of causing the organic acid and/or the saccharide to be absorbed, roasting the green coffee beans having absorbed the organic acid and/or the saccharide.

The roasted coffee beans produced by the production method of the present invention can be extracted under normal conditions. Roasting conditions are not particularly limited as long as they are normal conditions, and for example, the roasting conditions described in Non-Patent Document 3 may be referred to.

The roasted coffee beans thus obtained or an extract liquid thereof can be added to various foods and beverages such as coffee, coffee beverages, coffee-containing soft drinks, coffee-containing carbonated drinks, instant coffee, coffee concentrates, milk beverages, dairy products, cream, confectioneries, and raw confectioneries.

### Effects of the Invention

In the prior art, it is necessary to heat-treat green coffee beans at a high temperature of 100°C or higher, but according to the present invention, it is possible to inhibit the formation of specific unpleasant odor components (indole and skatole) to be generated in the coffee roasted beans in a short time under a heating condition of lower than 100°C.

### Brief Description of the Drawings

[Fig. 1] A graph comparing the effect of the organic acid addition to Robusta green coffee beans (produced in Vietnam) on the contents of indole (top) and skatole (bottom) of samples.
[Fig. 2] A graph comparing the effect of the amount of water addition to Robusta green coffee beans (produced in Vietnam) on the contents of indole (top) and skatole (bottom) of samples.
[Fig. 3] A graph comparing the effect of the amount of organic acid addition to Robusta green coffee beans (produced in Vietnam) on the contents of indole (top) and skatole (bottom) of samples.
[Fig. 4] A graph comparing the effect of the addition of a saccharide to Robusta green coffee beans (produced in Vietnam) on the contents of indole (top) and skatole (bottom) of samples.
[Fig. 5] A graph comparing the effect of the amount of water addition to Robusta green coffee beans (produced in Vietnam) on the contents of indole (top) and skatole (bottom) of samples.
[Fig. 6] A graph comparing the effect of the amount of saccharide addition to Robusta green coffee beans (produced in Vietnam) on the contents of indole (top) and skatole (bottom) of samples.
[Fig. 7] A graph comparing the effect of the addition of an organic acid and a saccharide to Robusta green coffee beans (produced in Vietnam) on the contents of indole (top) and skatole (bottom) of samples.
[Fig. 8] A graph comparing the effect of the amount of water addition to Robusta green coffee beans (produced in Vietnam) on the contents of indole (top) and skatole (bottom) of samples.
[Fig. 9] A graph comparing the effect of the addition of an organic acid and a saccharide to Robusta green coffee beans (produced in Uganda) and Robusta green coffee beans (produced in Indonesia) on the contents of indole (top) and skatole (bottom) of samples.
[Fig. 10] A graph comparing the effect of the addition of an organic acid and a saccharide to Arabica green coffee beans (produced in Brazil) on the contents of indole (top) and skatole (bottom) of samples.
[Fig. 11] A graph comparing the effect of the presence or absence of drying after causing an organic acid and a saccharide to be absorbed to Robusta green coffee beans (produced in Vietnam) on the contents of indole (top) and skatole (bottom) of samples. Mode for Carrying out the Invention

### 1. Green coffee beans to which the present invention is directed

The type of green coffee beans to which the present invention is directed is not limited, and may be Arabica coffee, Robusta coffee or Liberica coffee, and the production area is not particularly limited. Examples of the green coffee beans include Arabica coffee produced in Ethiopia, Central and South America such as Brazil and Columbia, Hawaii, and India; Robusta coffee produced in various places in Africa such as Congo, Indonesia, and Trinidad and Tobago; and Liberica coffee produced in Republic of Liberia on the west coast of Africa, Cote d'Ivoire, Angola, Indonesia, and Liberia. Brands of green coffee beans include Kilimanjaro, Blue Mountain, Emerald Mountain, Moca, Brazil, Guatemala, Columbia, Hawaii Kona, Mandheling, and Costa Rica. The moisture content of the green coffee beans is not particularly limited, but is, for example, from 9 to 13% by mass, and is usually from 10 to 12% by mass.

The present invention aims to reduce indole and skatole, which deteriorate the quality of roasted coffee beans, and therefore, it is useful to apply the present invention to Robusta, which has a high content of tryptophan, which is a precursor of those components, and is classified as low grade coffee, because the effect of the present invention is well exhibited, but the present invention may be applied to green coffee beans classified as commercial coffee or higher grade.

The green coffee beans to which the present invention is applied may be in the form of beans or may be ground.

### 2. Method for producing roasted coffee beans according to the present invention

The method for producing roasted coffee beans by the present invention is characterized by comprising:
(1) a step of adding 10% by mass or more of moisture to green coffee beans;
(2) a step of, after the step of adding the moisture, heating the green coffee beans and the moisture to a temperature lower than 100°C under atmospheric pressure to impregnate the green coffee beans with the moisture;
(3) a step of, after the step of impregnating the green coffee beans with the moisture, causing an organic acid and/or a saccharide to be absorbed to the green coffee beans impregnated with the moisture; and
(4) a step of, after the step of causing the organic acid and/or the saccharide to be absorbed, roasting the green coffee beans having absorbed the organic acid and/or the saccharide.

Through the above steps, the contents of indole and skatole in the roasted coffee beans are reduced more than the contents of indole and skatole in roasted coffee beans obtained by roasting unprocessed green coffee beans. In the present specification, "unprocessed green coffee beans" are green coffee beans in a state before undergoing the above step (1). In addition, in the present specification, the "processed green coffee beans" are green coffee beans having undergone the above steps (1) to (3).

It is said that indole and skatole are generated as a result of thermal decomposition of tryptophan contained in green coffee beans. Therefore, in the present invention, it is presumed that by causing an organic acid or a saccharide to be absorbed to unroasted green coffee beans, thermal decomposition of tryptophan is inhibited, or the reaction between tryptophan and the other components contained in green coffee beans is promoted, so that the formation of indole and skatole is inhibited. Further, in the present invention, it is presumed that a state where moisture is impregnated to inside of green coffee beans is formed through the steps (1) and (2), and thereafter, the step (3) of causing an organic acid and a saccharide to be absorbed to the green coffee beans is performed, so that the organic acid and the saccharide are easily impregnated to the inside of the green coffee beans, and inhibition of formation of indole and skatole described above is exerted throughout the inside of the green coffee beans. Therefore, the present invention is superior in inhibiting the formation of indole and skatole as compared with the case of causing an organic acid or a saccharide to be absorbed into green coffee beans without performing both or one of the above steps (1) and (2).

### (1) Step of adding moisture to green coffee beans

In the present invention, "adding 10% by mass or more of moisture to green coffee beans" means that the green coffee beans and a prescribed amount of moisture coexist in a vessel.

More specifically, the target green coffee beans and a prescribed amount of moisture are put into the vessel. The vessel may be in either a batch type or a continuous type as long as green coffee beans can be heated and mixed together with water therein. For example, a pan, a pot, a large pot, a cooking device including a pan or a pot with a heating means and/or a stirring means, a wet mixing device including a stirring blade, a mixing machine for food cooking or pharmaceutical production in which a container includes therein a mixing plate and the container itself is rotatable, a drum mixer designed to cause a material to flow and be mixed along a blade mounted in a mixing tank and mix the material soft without destroying the material, a solid culture device in which a ventilatable culture bed is mounted can be used. These devices may further include a pressurizing means or a spraying means. The vessel may also be lidded so that moisture does not escape. In the present invention, the lid may be a drop lid such as a heat-resistant film such as an aluminum foil, or may be a fitting type lid that closes the opening of the vessel. In addition, the large device as described above can have an airtight structure. In the present invention, heating to 100°C or higher under pressure is not intended, but in that case, a heat-resistant vessel is preferably used as the vessel, and an autoclave may also be used as the heat-resistant vessel.

In the present invention, moisture is added in an amount of 10% by mass or more, preferably 20% by mass or more, and more preferably 30% by mass or more as a lower limit with respect to the mass of the target green coffee beans without depending on the type of the green coffee beans and the moisture content of the green coffee beans at the time of adding the moisture. The upper limit of the moisture to be added per mass of the target green coffee beans is not limited, but is 100% by mass or less, preferably 75% by mass or less, and more preferably 60% by mass or less. When 10% by mass or more of moisture is added and the treatment is performed under the conditions specified in the present invention, the content of indole and skatole in the roasted coffee beans is significantly reduced as compared with roasted coffee beans produced without performing all the treatments under the conditions specified in the present invention. When 75% by mass or less of moisture is added, substantially all moisture is absorbed by the green coffee beans. In the present invention, the amount of the moisture to be added with respect to the mass of the green coffee beans to be targeted is, for example, 10% by mass or more, from 10 to 100% by mass, from 10 to 75% by mass, from 20 to 65% by mass, from 20 to 60% by mass, or from 30 to 60% by mass.

The moisture to be added may be water such as pure water, ultrapure water, ion-exchanged water, filtered water, well water, natural water, mineral water, tap water, or mixed water thereof. The temperature of the moisture to be added is not particularly limited as long as the lower limit is higher than the freezing point of water and the upper limit is lower than 100°C, which is the boiling point of water, under atmospheric pressure, and may be cold water colder than room temperature, water at about room temperature, or warm water warmer than room temperature or high temperature water. In the present invention, the temperature of the moisture to be added is, for example, 0°C or higher and lower than 100°C, from 0 to 99°C, from 5 to 99°C, or from 5 to 95°C. In particular, when the temperature is in a temperature range of from 1 to 35°C, from 1 to 30°C, from 1 to 15°C, from 5 to 35°C, from 5 to 30°C, from 15 to 35°C, from 15 to 30°C, or from 15 to 25°C, the work can be performed at room temperature or normal temperature in the work environment, or in a cold place.

In the present invention, "room temperature" means from 1 to 35°C, "normal temperature" means from 15 to 35°C, and "cold place" means "from 1 to 15°C".

In the present specification, the symbol " - " combining an upper limit and a lower limit includes the upper limit and the lower limit. For example, "A - B" means A or more and B or less.

The moisture to be added may be a blended liquid prepared by mixing the above-described water with such a material as spices (e.g., cocoa, cinnamon, vanilla, coriander, cardamon, clove, ginger, nutmeg, allspice, garlic, and lindera umbellata), herbs (e.g., rosemary, mint, basil, lemongrass, hop, jasmine, lavender, bergamot, lilac, and orange peel), teas (e.g., green tea, oolong tea, Pu'er tea, and black tea), cereals (e.g., rice, barley, malt, and Job's tears), vegetables (e.g., tomato, eggplant, green pepper, paprika, carrot, squash, cucumber, burdock, kidney bean, pea, soybean, and sweet potato), fruits (e.g., pineapple, apple, strawberry, banana, grape, peach, raspberry, cherry, blueberry, mango, orange, lemon, grapefruit, and apricot), or peels or seeds of vegetables or fruits. The amount of the moisture to be added in the case of being added as a blended liquid means the content of water contained in the blended liquid added. The amount of the above-described materials to be mixed in the blended liquid is not particularly limited, and may be appropriately adjusted according to the shape of the materials. By using such a blended liquid, the characteristic odor of the above-described materials can be efficiently imparted to the green coffee beans. Spices, herbs, teas, cereals, vegetables, fruits, peels or seeds of vegetables or fruits that can be used as the above-described material may be appropriately selected according to the desired odor to be imparted to the green coffee beans, and that can be generally obtained can be used. The above-described material may be used in its original shape or size, or may be processed into a specific shape or size and used, but is preferably used in an arbitrary powder shape because it is easy to mix with water. As the above-described material, spices or herbs are preferably used because they are rich in odor components and are superior in improving or strengthening an odor of coffee.

### (2) Step of impregnating green coffee beans with moisture

In the present invention, "to heat green coffee beans and moisture to a temperature lower than 100°C under atmospheric pressure to impregnate the green coffee beans with the moisture" means that the temperature of the green coffee beans and the added moisture is raised from room temperature to a set temperature lower than 100°C without pressurization, and as a result, the added moisture is impregnated to inside of the green coffee beans. At this time, moisture may attach to the outer surface of the green coffee beans, and further excessive moisture may exist outside the green coffee beans. In the present specification, impregnating added moisture to inside of green coffee beans may be simply referred to as "water addition".

More specifically, green coffee beans put in a vessel (preferably, a heat-resistant vessel) and a prescribed amount of moisture added are heated from a temperature of the moisture to be added, for example, a room temperature (from 1 to 35°C) to a set temperature lower than 100°C under atmospheric pressure without pressurization, whereby the green coffee beans are impregnated with moisture. The upper limit of the set temperature is lower than 100°C, preferably 99°C or lower, and more preferably 95°C or lower. The lower limit of the set temperature is not particularly limited as long as the temperature is higher than room temperature, but is, for example, 35°C or higher, preferably 50°C or higher, and more preferably 60°C or higher from the viewpoint of promoting the impregnation of moisture to inside of the green coffee beans. In the present invention, the range of the set temperature is, for example, 35°C or higher and lower than 100°C, from 35°C to 99°C, from 40°C to 99°C, from 50°C to 95°C, or from 60°C to 95°C.

Both the time for heating the green coffee beans and the moisture and the temperature raising profile are not particularly limited as long as the moisture is impregnated to inside of the green coffee beans, and although depending on the weight of the green coffee beans to be treated, but the lower limit is 5 minutes or more, preferably 10 minutes or more, and more preferably 15 minutes or more (for example, 30 minutes or more). The upper limit is less than 16 hours, preferably 15 hours or less, more preferably 6 hours or less, and still more preferably 3 hours or less. When the heating time is 5 minutes or more, a sufficient amount of moisture is absorbed into the green coffee beans. In the present invention, the time for impregnating the green coffee beans with moisture is, for example, 5 minutes or more and less than 16 hours, from 5 minutes to 15 hours, from 5 minutes to 6 hours, from 10 minutes to 3 hours, or from 10 minutes to 2 hours, or 30 minutes or more and less than 16 hours.

The heating may be performed by applying heat energy to the green coffee beans and the coexisting moisture to increase the temperature of the inside of the green coffee beans and the moisture. Examples of the method of applying heat energy include a steaming method in which water vapor is directly applied to the green coffee beans, and a method in which the entire vessel is heated to increase the temperatures of the green coffee beans and the moisture.

### (3) Step of causing organic acid and/or saccharide to be absorbed

In the present invention, "to cause an organic acid and/or a saccharide to be absorbed to green coffee beans" not only includes adding the organic acid and/or the saccharide to the green coffee beans and then causing the organic acid and/or the saccharide to be absorbed to inside of the green coffee beans, but also include causing the organic acid and/or the saccharide to attach to the outer surface of the green coffee beans, and means producing a state where the organic acid and/or the saccharide can act on the components of the green coffee beans.

The organic acid that can be used in the present invention is not particularly limited as long as it is edible. Examples of the organic acid include lactic acid, citric acid, acetic acid, propionic acid, butyric acid, oxalic acid, malonic acid, gluconic acid, malic acid, tartaric acid, fumaric acid, succinic acid, and adipic acid. Because of being superior in the effect of inhibiting the formation of indole and skatole, lactic acid, citric acid and acetic acid are preferred, and lactic acid is more preferred.

The saccharides that can be used in the present invention are monosaccharides and disaccharides, and monosaccharides are preferable. Examples of the monosaccharides include glucose (grape sugar), fructose (fruit sugar), galactose, xylose, arabinose, and tagatose, and examples of the disaccharide include sucrose, lactose, maltose (malt sugar), isomaltose, trehalose, and cellobiose. Because of being superior in the effect of inhibiting the formation of indole and skatole, glucose, fructose and maltose are preferred, and fructose and glucose are more preferred.

As the organic acid, a single organic acid may be used alone, or multiple organic acids may be used in combination. When multiple organic acids are used in combination, the type and ratio of the organic acids to be combined are not particularly limited, and because of being superior in the effect of inhibiting the formation of indole and skatole, the organic acids preferably include one or more among lactic acid, citric acid and acetic acid, more preferably include at least lactic acid, still more preferably include 30% by mass or more of lactic acid, and further preferably include 50% by mass or more of lactic acid.

As the saccharide, a single saccharide may be used alone, or multiple saccharides may be used in combination. When multiple saccharides are used in combination, the type and ratio of the saccharides to be combined are not particularly limited, and because of being superior in the effect of inhibiting the formation of indole and skatole, the saccharides preferably include one or more among glucose, fructose and maltose, more preferably include glucose or fructose, still more preferably include at least glucose, further preferably include 30% by mass or more of glucose, and particularly preferably include 50% by mass or more of glucose.

In Patent Document 6, green coffee beans are immersed in sake lees to reduce odor components that cause an unpleasant odor such as indole and skatole in roasted coffee beans. It is known that sake lees contain various organic acids and saccharides, amino acids, and other components (for example, Non-Patent Documents 1 and 2). However, the amount of organic acids and saccharides contained in the sake lees is very small, and for example, the amount of lactic acid is 74 mg/100 g, the amount of acetic acid is about 30 mg/100 g, and the amount of all organic acids is from 189 to 418 mg/100 g. The amount of glucose is about 15%. In addition, the type and composition of the components contained in the sake lees are affected by various production conditions such as the type and composition of the fermentation raw material, the type of the koji mold to be used for koji, and fermentation conditions. While sake lees generally contain moisture, carbohydrates, proteins, lipids, ash, and various vitamins, it is not clear which components contribute to reduction of unpleasant odors.

An organic acid and/or a saccharide is added to the green coffee beans impregnated with moisture as described above, and then the organic acid and/or the saccharide is permeated to inside of the green coffee beans and caused to attach to the outer surface of the green coffee beans. In this manner, the organic acid and/or the saccharide adhered to the inside and the outer surface of the green coffee beans can act on components of the green coffee beans. In the present invention, a total of an amount of the organic acid and/or the saccharide that has permeated to inside of the green coffee beans and an amount of the organic acid and/or the saccharide that has adhered to the outer surface of the green coffee beans is defined as the amount of the organic acid and/or the saccharide that have been absorbed by the green coffee beans.

The organic acid or the saccharide (the total amount of organic acids or the total amount of saccharides) is caused to be absorbed in an amount of 0.5% by mass or more, preferably 0.7% by mass or more, and more preferably 1.0% by mass or more, as a lower limit, with respect to the mass of the unprocessed green coffee beans. The upper limit of the amount of the organic acid or the saccharide caused to be absorbed with respect to the mass of the unprocessed green coffee beans is not limited, but is 10% by mass or less, or 5% by mass or less. When 10% by mass or less of the organic acid or the saccharide is added, substantially all of the organic acid or the saccharide is absorbed by the green coffee beans. When 0.5% by mass or more in total of the organic acid or saccharide is caused to be absorbed and the processing is performed under the conditions specified in the present invention, the content of indole and skatole in roasted coffee beans is significantly reduced as compared with roasted coffee beans produced without the treatment under all the conditions specified in the present invention. In the present invention, the amount of the organic acid or the saccharide to be added with respect to the mass of the unprocessed green coffee beans is, for example, 0.5% by mass or more, 0.7% by mass or more, 1.0% by mass or more, from 0.5 to 10% by mass, from 0.7 to 10% by mass, from 0.7 to 5% by mass, or from 1.0 to 5% by mass.

The organic acid and the saccharide may be used in combination, and when these are used in combination, it is possible to cause these to be absorbed each in the above amount to the green coffee beans. When the organic acid and the saccharide are used in combination, the use ratio (mass ratio) thereof is not particularly limited, and is, for example, in the range of from 99 : 1 to 1 : 99, preferably in the range of from 90 : 10 to 10 : 90, and more preferably in the range of from 80 : 20 to 20 : 80 in terms of the organic acid : the saccharide.

In the step of adding the organic acid and/or the saccharide, it is possible to add the organic acid and/or the saccharide as it is to the coffee beans and cause the organic acid and/or the saccharide to be absorbed, but when an aqueous solution containing the organic acid and/or the saccharide is added to the green coffee beans, it is possible to cause the organic acid and/or the saccharide to be absorbed uniformly into the whole green coffee beans. The concentration of the organic acid or the saccharide in the aqueous solution is not particularly limited as long as a prescribed amount of the organic acid and/or the saccharide is absorbed to inside of the green coffee beans and attach to the outer surface of the green coffee beans. For example, the lower limit of the concentration of the organic acid or the saccharide in the aqueous solution is 10% by mass or more, preferably 20% by mass or more, and more preferably 50% by mass or more. Although depending on the amount of the moisture already absorbed by the green coffee beans, when the concentration of the organic acid or the saccharide in the aqueous solution is 10% by mass or more, it is possible to cause a prescribed amount of the organic acid and/or the saccharide to be absorbed to the green coffee beans and attach to the outer surface thereof.

Conditions such as temperature and time in the step of adding the organic acid and/or the saccharide are not particularly limited as long as the organic acid and/or the saccharide is absorbed into the green coffee beans, and this step may be performed under any conditions. For example, the temperature is from room temperature (from 1 to 35°C) to 90°C, preferably from 15 to 85°C, and the time is from 30 minutes to less than 16 hours, preferably from 30 minutes to 12 hours, more preferably from 1 to 6 hours.

### (4) Step of roasting green coffee beans having absorbed organic acid and/or saccharide

In the present invention, "to roast green coffee beans having absorbed an organic acid and/or a saccharide" means that the green coffee beans are put into a roasting machine, and an amount of heat in the roasting machine is adjusted to impart heat energy to the green coffee beans.

In the present invention, roasting conditions such as roasting temperature and roasting environment are not particularly limited as long as they are normal conditions, and the roasting conditions described in Non-Patent Document 3 may be referred to. By setting the roasting temperature to be from 190 to 240°C and controlling a temperature profile before and after roasting, flavors such as sourness, bitterness, and richness can be adjusted. In the present invention, the degree of roasting of roasted coffee beans is not particularly limited, and is defined by an L value measured under the following conditions. The L value is a value of "L" representing lightness in the standard of Lab defined by the International Commission on Illumination. A reference L value for a degree of roasting is, for example, 27.0 or more for shallow roast (light roast), 18.5 or more and less than 20.5 for medium roast (city roast), and 15.0 or more and less than 16.5 for deep roast (French roast). In the present invention, a roasting apparatus and a heating method are not particularly limited, and known roasting apparatuses and heating methods such as an open fire type, a semi-hot air type, and a hot air type can be used.

### (5) Step of drying green coffee beans having absorbed organic acid and/or saccharide

After the step of causing the organic acid and/or the saccharide to be absorbed and until performing roasting, the green coffee beans having absorbed moisture and been moistened in the step described above may be roasted after drying the green coffee beans or may be roasted without drying the green coffee beans. In the case of drying green coffee beans, the method of the drying is not particularly limited, and those skilled in the art may appropriately set the method. For example, the green coffee beans may be hot-air dried in a food dryer, or may be dried by such a method as fluidized bed drying or natural drying, and the drying conditions may be appropriately set by those skilled in the art, but for example, the green coffee beans may be dried at 60°C to 80°C for 1 to 4 hours. Degree of drying may be approximately equal to a moisture content of the unprocessed green coffee beans (for example, from 9 to 13% by mass), and in relation to the roasting step, the degree of drying may be adjusted such that a moisture content different from the moisture content of the unprocessed green beans is attained.

In the present invention, it is not essential to perform the drying step, and wet green coffee beans may be directly applied to the roasting step. Roasting conditions are appropriately set according to the wet state and the degree of drying of the green coffee beans, whereby roasted coffee beans having a desired degree of roasting are obtained.

It has been confirmed that a content of indole and skatole, which are unpleasant odor components, of the thus obtained roasted coffee beans is significantly reduced and the rank of flavor evaluation is improved as compared with roasted coffee beans produced by a normal production method.

Hereinafter, the present invention will be described using control examples, examples and comparative examples, but the present invention is not limited thereto, and it should be construed that any modification or addition may be made and the present invention may be used in combination with other techniques as long as the object of the present invention is not hindered.

### Examples

### Experiment 1 Effect of organic acid addition to green coffee beans

### (1) Roasted coffee beans

### [Control A]

100 g of Robusta green coffee beans (made in Vietnam) were roasted at 235°C until an L value reached 20 using a Gene Cafe (manufactured by Genesis) to afford coffee roasted beans (Control A of Robusta made in Vietnam).

### [Control B]

100 g of Robusta green coffee beans (made in Vietnam) and 40 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

Thereafter, the coffee beans were dried until the moisture content reached about a moisture content before processing, and the resulting dried green coffee beans were roasted at 235°C until an L value reached 20 using a Gene Cafe (manufactured by Genesis) to afford coffee roasted beans (Control B of Robusta made in Vietnam).

In the experimental section, roasting conditions were unified to those for medium roasting with an L value of 20 because the change in contents of indole and skatole in roasted coffee beans is easily recognized, but in the present invention, degree of roasting is not limited.

### [Samples 1-1 to 1-3]

100 g of Robusta green coffee beans (made in Vietnam) and 40 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

3 g, per 100 g of unprocessed green coffee beans, of an organic acid (lactic acid, citric acid, or acetic acid) was added to the heating-treated green coffee beans, and the mixture was allowed to stand at room temperature for 3 hours for absorption.

Thereafter, the coffee beans were dried until the moisture content reached about a moisture content before processing, and the resulting dried processed green coffee beans were roasted at 235°C until an L value reached 20 using a Gene Cafe (manufactured by Genesis) to afford coffee roasted beans (Samples 1-1 to 1-3 of Robusta made in Vietnam).

### (2) Coffee extract liquid

For Controls A and B and Samples 1-1 to 1-3, each lot of coffee roasted beans was ground to fine grinding with a corn grinder (De'Longhi S.p.A) to afford a roasted bean powder. 180 mL of hot water was poured into 10 g of the roasted bean powder, the mixture was held for 4 minutes, and then the whole mixture was stirred to remove bubbles remaining on a surface. Thereafter, the mixture was held until a time of 12 minutes lapsed from the pour of the hot water (namely, an extraction time was set to 12 minutes), and then a supernatant after the roasting bean powder was naturally precipitated was collected as a coffee extract liquid.

### (3) Measurement of contents of indole and skatole in coffee extract liquids

3-Methyl-1H-indole-d8 (available from Toronto Research Chemicals Inc.) was dissolved in a 50 vol% aqueous methanol solution such that a concentration of 100 ng/mL was attained, and afforded an internal standard solution. 25 µL of this internal standard solution, 400 µL of a 50 vol% aqueous methanol solution, and 100 µL of each coffee extract liquid were mixed, and then filtered through a PTFE filter having a pore size of 0.2 µm, and the filtrate was used as an analysis sample. The analysis sample was measured for the contents of indole and skatole according to the following LC-MS/MS conditions. The number of data per condition was 3, and an average value was calculated and taken as a quantitative value.

### (4) Measurement results

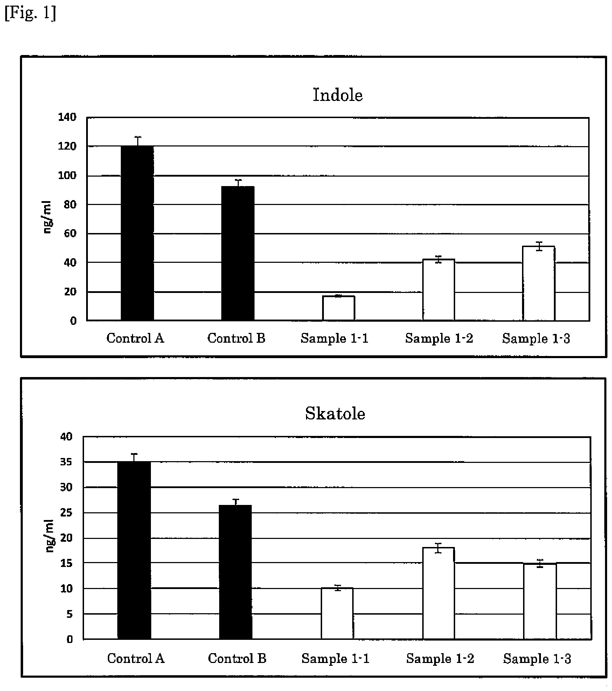

Table 1 summarizes the quantitative values and standard deviations of indole and skatole of respective samples, and Fig. 1 shows a graph comparing the quantitative values of indole (top) and skatole (bottom) of the respective samples.

**[Table 1]**

| | | **Robusta made in Vietnam** | | | | |
|---|---|---|---|---|---|---|
| | | **Control Example** | | **Example** | | |
| | | **Control A** | **Control B** | **Sample 1-1** | **Sample 1-2** | **Sample 1-3** |
| **Processing conditions** | **Water addition amount** | **No addition** | **40% by mass** | **40% by mass** | **40% by mass** | **40% by mass** |
| | **Heating condition** | **No heating** | **90°C, 30 minutes** | **90°C, 30 minutes** | **90°C, 30 minutes** | **90°C, 30 minutes** |
| | **Component amount** | **No addition** | **No addition** | **Lactic acid 3% by mass** | **Citric acid 3% by mass** | **Acetic acid 3% by mass** |
| **L value** | | **20** | **20** | **20** | **20** | **20** |
| **Indole_quantitative value (Average, ng/ml)** | | **120.37** | **92.34** | **17.06** | **42.34** | **51.39** |
| **Skatole_quantitative value (Average, ng/ml)** | | **34.92** | **26.25** | **10.13** | **18.09** | **14.97** |
| **Indole_standard deviation** | | **4.26** | **3.57** | **0.77** | **0.92** | **2.29** |
| **Skatole_standard deviation** | | **3.50** | **1.17** | **0.34** | **0.94** | **1.26** |

### (5) Discussion

It was confirmed that the contents of indole or skatole in the extract liquids obtained from the green coffee beans of the Examples processed by water addition, heating and organic acid addition were significantly reduced as compared with the extract liquids obtained from either of the Control Examples. In particular, when lactic acid was used as the organic acid, it was confirmed that the content of indole or skatole was significantly reduced.

### Experiment 2 Effect of amount of water addition to green coffee beans

### (1) Roasted coffee beans

### [Sample 2-1]

100 g of Robusta green coffee beans (made in Vietnam) was put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

3 g, per 100 g of unprocessed green coffee beans, of lactic acid was added to the heating-treated green coffee beans, and the mixture was allowed to stand at room temperature for 3 hours for absorption.

Thereafter, the coffee beans were dried until the moisture content reached about a moisture content before processing, and the resulting dried green coffee beans were roasted at 235°C until an L value reached 20 using a Gene Cafe (manufactured by Genesis) to afford coffee roasted beans (Sample 2-1 of Robusta made in Vietnam).

### [Samples 2-2 to 2-8]

100 g of Robusta green coffee beans (made in Vietnam) and 10 g, 20 g, 30 g, 40 g, 50 g, 60 g or 100 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

Coffee roasted beans (Samples 2-2 to 2-8 of Robusta made in Vietnam) were obtained by the same procedure as in Sample 2-1 except for the above.

### [Sample 2-9]

100 g of Robusta green coffee beans (made in Vietnam) and 40 g of water at room temperature were put into a heat-resistant vessel, and then coffee roasted beans (Sample 2-9 of Robusta made in Vietnam) were obtained by the same procedure as in Sample 2-1 except that a heating treatment was not performed.

### (2) Coffee extract liquid

For Samples 2-1 to 2-9, a coffee extract liquid was prepared as for Controls A and B.

### (3) Measurement of contents of indole and skatole in coffee extract liquids

For Samples 2-1 to 2-9, the contents of indole and skatole were determined as for Controls A and B. The number of data per condition was 3, and an average value was calculated and taken as a quantitative value.

### (4) Measurement results

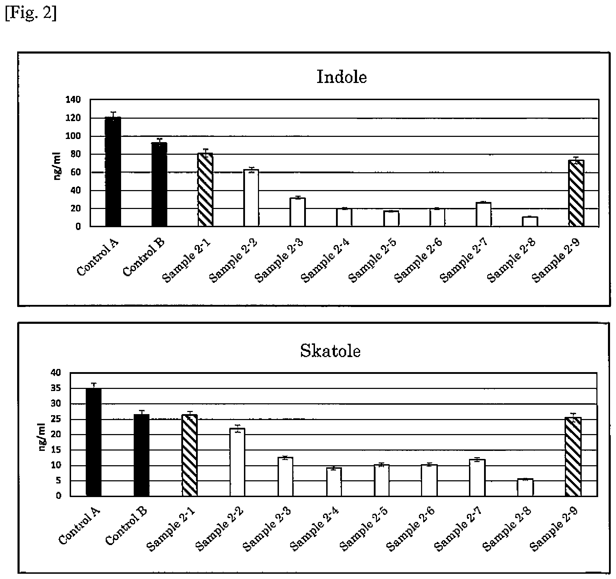

Table 2 summarizes the quantitative values and standard deviations of indole and skatole of respective samples, and Fig. 2 shows a graph comparing the quantitative values of indole (top) and skatole (bottom) of the respective samples.

**[Table 2]**

| | | **Robusta made in Vietnam** | | | | | | | | | | |
|---|---|---|---|---|---|---|---|---|---|---|---|---|
| | | **Control Example** | | **Comparativ e Example** | **Example** | | | | | | | **Comparativ e Example** |
| | | **Control A** | **Control B** | **Sample 2-1** | **Sample 2-2** | **Sample 2-3** | **Sample 2-4** | **Sample 2-5** | **Sample 2-6** | **Sample 2-7** | **Sample 2-8** | **Sample 2-9** |
| **Processin g condition s** | **Water addition amount** | **No additio n** | **40% by mass** | **No addition** | **10% by mass** | **20% by mass** | **30% by mass** | **40% by mass** | **50% by mass** | **60% by mass** | **100% by mass** | **40% by mass** |
| | **Heating condition** | **No heating** | **90°C, 30 minute s** | **90°C, 30 minutes** | **90°C, 30 minute s** | **90°C, 30 minute s** | **90°C, 30 minute s** | **90°C, 30 minute s** | **90°C, 30 minute s** | **90°C, 30 minute s** | **90°C, 30 minute s** | **No heating** |
| | **Componen t addition amount** | **No additio n** | **No additio n** | **Lactic acid 3% by mass** | **Lactic acid 3% by mass** | **Lactic acid 3% by mass** | **Lactic acid 3% by mass** | **Lactic acid 3% by mass** | **Lactic acid 3% by mass** | **Lactic acid 3% by mass** | **Lactic acid 3% by mass** | **Lactic acid 3% by mass** |
| **L value** | | **20** | **20** | **20** | **20** | **20** | **20** | **20** | **20** | **20** | **20** | **20** |
| **Indole_quantitative value (Average, ng/ml)** | | **120.37** | **92.34** | **81.19** | **62.67** | **31.84** | **20.24** | **17.06** | **20.00** | **26.72** | **11.06** | **73.13** |
| **Skatole_ quantitative value (Average, ng/ml)** | | **34.92** | **26.25** | **26.18** | **21.83** | **12.40** | **9.05** | **10.13** | **10.21** | **11.76** | **5.34** | **25.46** |
| **Indole_standard deviation** | | **4.26** | **3.57** | **4.86** | **1.47** | **3.52** | **1.07** | **0.77** | **1.83** | **0.39** | **1.98** | **4.00** |
| **Skatole_standard deviation** | | **3.50** | **1.17** | **0.86** | **1.14** | **0.86** | **0.65** | **0.34** | **0.06** | **1.17** | **1.63** | **2.32** |

### (5) Discussion

It was confirmed that the contents of indole or skatole in the extract liquids obtained from the green coffee beans of the Examples processed by 10% by mass or more of water addition, heating and organic acid addition were significantly reduced as compared with the extract liquids obtained from any of the Control Examples and the Comparative Examples.

### Experiment 3 Effect of amount of organic acid addition to green coffee beans

### (1) Roasted coffee beans

### [Samples 3-1 to 3-4]

100 g of Robusta green coffee beans (made in Vietnam) and 40 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

0.7, 1, 3 or 5 g, per 100 g of unprocessed green coffee beans, of lactic acid was added to the heating-treated green coffee beans, and the mixture was allowed to stand at room temperature for 3 hours for absorption.

Thereafter, the coffee beans were dried until the moisture content reached about a moisture content before processing, and the resulting dried processed green coffee beans were roasted at 235°C until an L value reached 20 using a Gene Cafe (manufactured by Genesis) to afford coffee roasted beans (Samples 3-1 to 3-4 of Robusta made in Vietnam).

### (2) Coffee extract liquid

For Samples 3-1 to 3-4, a coffee extract liquid was prepared as for Controls A and B.

### (3) Measurement of contents of indole and skatole in coffee extract liquids

For Samples 3-1 to 3-4, the contents of indole and skatole were determined as for Controls A and B. The number of data per condition was 3, and an average value was calculated and taken as a quantitative value.

### (4) Evaluation results

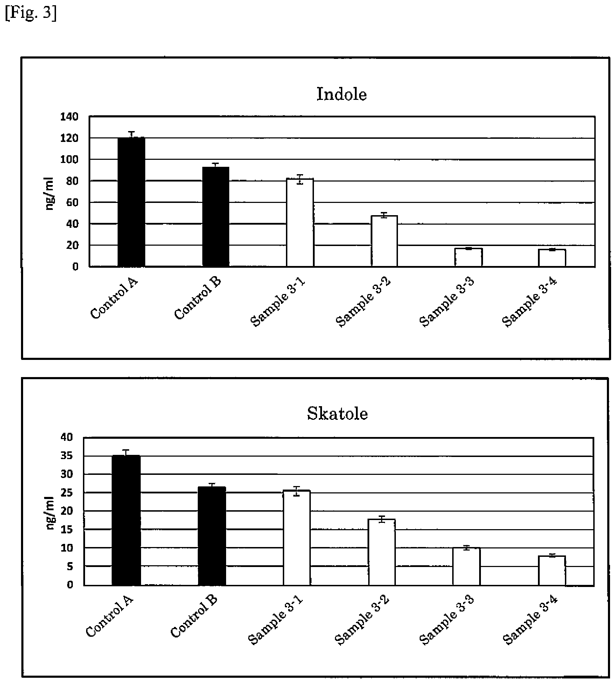

Table 3 summarizes the quantitative values and standard deviations of indole and skatole of respective samples, and Fig. 3 shows a graph comparing the quantitative values of indole (top) and skatole (bottom) of the respective samples.

**[Table 3]**

| | | **Robusta made in Vietnam** | | | | | |
|---|---|---|---|---|---|---|---|
| | | **Control Example** | | **Example** | | | |
| | | **Control A** | **Control B** | **Sample 3-1** | **Sample 3-2** | **Sample 3-3** | **Sample 3-4** |
| **Processing conditions** | **Water addition amount** | **No addition** | **40% by mass** | **40% by mass** | **40% by mass** | **40% by mass** | **40% by mass** |
| | **Heating condition** | **No heating** | **90°C, 30 minutes** | **90°C, 30 minutes** | **90°C, 30 minutes** | **90°C, 30 minutes** | **90°C, 30 minutes** |
| | **Component addition amount** | **No addition** | **No addition** | **Lactic acid 0.7% by mass** | **Lactic acid 1% by mass** | **Lactic acid 3% by mass** | **Lactic acid 5% by mass** |
| **L value** | | **20** | **20** | **20** | **20** | **20** | **20** |
| **Indole_quantitative value (Average, ng/ml)** | | **120.37** | **92.34** | **81.98** | **48.29** | **17.06** | **16.6** |
| **Skatole_quantitative value (Average, ng/ml)** | | **34.92** | **26.25** | **25.47** | **17.88** | **10.13** | **7.95** |
| **Indole_standard deviation** | | **4.26** | **3.57** | **2.88** | **0.89** | **0.77** | **0.56** |
| **Skatole_standard deviation** | | **3.50** | **1.17** | **0.68** | **0.31** | **0.34** | **0.36** |

### (5) Discussion

It was confirmed that the contents of indole or skatole in the extract liquids obtained from the green coffee beans of Examples processed by water addition, heating and 0.7% by mass or more of organic acid addition were significantly reduced as compared with the extract liquids obtained from either of the Control Examples.

### Experiment 4 Effect of addition of saccharide to green coffee beans

### (1) Roasted coffee beans

### [Samples 4-1 to 4-3]

100 g of Robusta green coffee beans (made in Vietnam) and 40 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

3 g, per 100 g of unprocessed green coffee beans, of a saccharide (fructose, maltose, or glucose) was added to the heating-treated green coffee beans, and the mixture was allowed to stand at room temperature for 3 hours for absorption.

Thereafter, the coffee beans were dried until the moisture content reached about a moisture content before processing, and the resulting dried processed green coffee beans were roasted at 235°C until an L value reached 20 using a Gene Cafe (manufactured by Genesis) to afford coffee roasted beans (Samples 4-1 to 4-3 of Robusta made in Vietnam).

### (2) Coffee extract liquid

For Samples 4-1 to 4-3, a coffee extract liquid was prepared as for Controls A and B.

### (3) Measurement of contents of indole and skatole in coffee extract liquids

For Samples 4-1 to 4-3, the contents of indole and skatole were determined as for Controls A and B. The number of data per condition was 3, and an average value was calculated and taken as a quantitative value.

### (4) Evaluation results

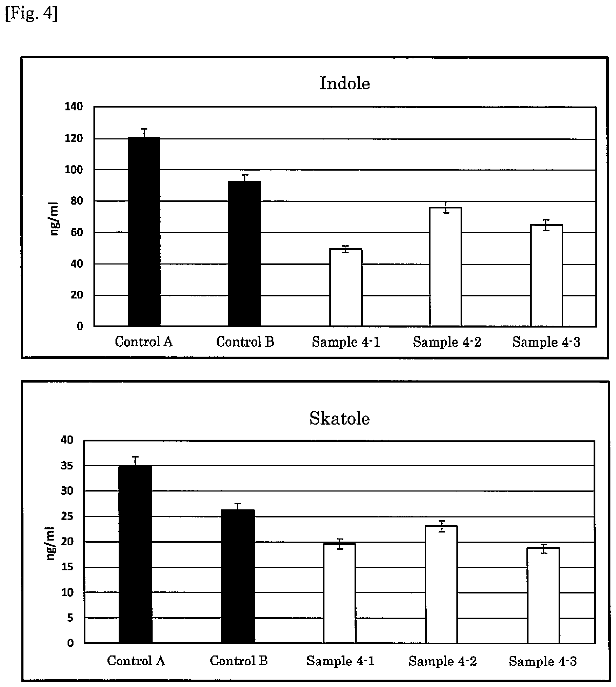

Table 4 summarizes the quantitative values and standard deviations of indole and skatole of respective samples, and Fig. 4 shows a graph comparing the quantitative values of indole (top) and skatole (bottom) of the respective samples.

**[Table 4]**

| | | **Robusta made in Vietnam** | | | | |
|---|---|---|---|---|---|---|
| | | **Control Example** | | **Example** | | |
| | | **Control A** | **Control B** | **Sample 4-1** | **Sample 4-2** | **Sample 4-3** |
| **Processing conditions** | **Water addition amount** | **No addition** | **40% by mass** | **40% by mass** | **40% by mass** | **40% by mass** |
| | **Heating condition** | **No heating** | **90°C, 30 minutes** | **90°C, 30 minutes** | **90°C, 30 minutes** | **90°C, 30 minutes** |
| | **Component addition amount** | **No addition** | **No addition** | **Fructose 3% by mass** | **Maltose 3% by mass** | **Glucose 3% by mass** |
| **L value** | | **20** | **20** | **20** | **20** | **20** |
| **Indole_quantitative value (Average, ng/ml)** | | **120.37** | **92.34** | **49.53** | **76.24** | **64.7** |
| **Skatole_quantitative value (Average, ng/ml)** | | **34.92** | **26.25** | **19.61** | **23.09** | **18.71** |
| **Indole_standard deviation** | | **4.26** | **3.57** | **1.46** | **2.11** | **5.11** |
| **Skatole_standard deviation** | | **3.50** | **1.17** | **0.37** | **1.35** | **1.85** |

### (5) Discussion

It was confirmed that the contents of indole or skatole in the extract liquids obtained from the green coffee beans of the Examples processed by water addition, heating and saccharide addition were significantly reduced as compared with the extract liquids obtained from either of the Control Examples. In particular, when fructose or glucose was used as the saccharide, it was confirmed that the content of indole or skatole was more reduced.

### Experiment 5 Effect of amount of water addition to green coffee beans

### (1) Roasted coffee beans

### [Sample 5-1]

100 g of Robusta green coffee beans (made in Vietnam) was put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

3 g, per 100 g of unprocessed green coffee beans, of glucose was added to the heating-treated green coffee beans, and the mixture was allowed to stand at room temperature for 3 hours for absorption.

Thereafter, the coffee beans were dried until the moisture content reached about a moisture content before processing, and the resulting dried green coffee beans were roasted at 235°C until an L value reached 20 using a Gene Cafe (manufactured by Genesis) to afford coffee roasted beans (Sample 5-1 of Robusta made in Vietnam).

### [Samples 5-2 to 5-8]

100 g of Robusta green coffee beans (made in Vietnam) and 10 g, 20 g, 30 g, 40 g, 50 g, 60 g or 100 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

Coffee roasted beans (Samples 5-2 to 5-8 of Robusta made in Vietnam) were obtained by the same procedure as in Sample 5-1 except for the above.

### [Sample 5-9]

100 g of Robusta green coffee beans (made in Vietnam) and 40 g of water at room temperature were put into a heat-resistant vessel, and then coffee roasted beans (Sample 5-9 of Robusta made in Vietnam) were obtained by the same procedure as in Sample 5-1 except that a heating treatment was not performed.

### (2) Coffee extract liquid

For Samples 5-1 to 5-9, a coffee extract liquid was prepared as for Controls A and B.

### (3) Measurement of contents of indole and skatole in coffee extract liquids

For Samples 5-1 to 5-9, the contents of indole and skatole were determined as for Controls A and B. The number of data per condition was 3, and an average value was calculated and taken as a quantitative value.

### (4) Measurement results

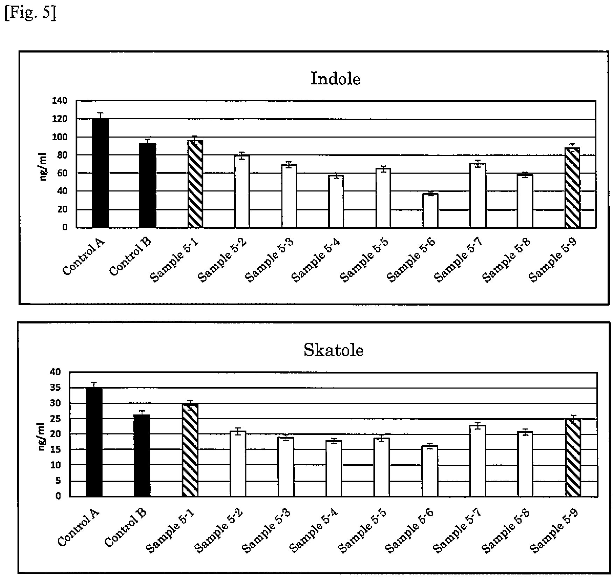

Table 5 summarizes the quantitative values and standard deviations of indole and skatole of respective samples, and Fig. 5 shows a graph comparing the quantitative values of indole (top) and skatole (bottom) of the respective samples.

**[Table 5]**

| | | **Robusta made in Vietnam** | | | | | | | | | | |
|---|---|---|---|---|---|---|---|---|---|---|---|---|
| | | **Control Example** | | **Compar ative Example** | **Example** | | | | | | | **Compar ative Example** |
| | | **Control A** | **Control B** | **Sample 5-1** | **Sample 5-2** | **Sample 5-3** | **Sample 5-4** | **Sample 5-5** | **Sample 5-6** | **Sample 5-7** | **Sample 5-8** | **Sample 5-9** |
| **Processi ng conditio ns** | **Water addition amount** | **No additio n** | **40% by mass** | **No treatme nt** | **10% by mass** | **20% by mass** | **30% by mass** | **40% by mass** | **50% by mass** | **60% by mass** | **100% by mass** | **40% by mass** |
| | **Heating condition** | **No heating** | **90°C, 30 minutes** | **90°C, 30 minutes** | **90°C, 30 minutes** | **90°C, 30 minutes** | **90°C, 30 minutes** | **90°C, 30 minutes** | **90°C, 30 minutes** | **90°C, 30 minutes** | **90°C, 30 minutes** | **No heating** |
| | **Componen t addition amount** | **No additio n** | **No addition** | **Glucose 3% by mass** | **Glucose 3% by mass** | **Glucose 3% by mass** | **Glucose 3% by mass** | **Glucose 3% by mass** | **Glucose 3% by mass** | **Glucose 3% by mass** | **Glucose 3% by mass** | **Glucose 3% by mass** |
| **L value** | | **20** | **20** | **20** | **20** | **20** | **20** | **20** | **20** | **20** | **20** | **20** |
| **Indole_ quantitative value (Average, ng/ml)** | | **120.37** | **92.34** | **96.52** | **79.13** | **69.17** | **57.10** | **64.70** | **37.80** | **70.81** | **58.42** | **88.14** |
| **Skatole_ quantitative value (Average, ng/ml)** | | **34.92** | **26.25** | **29.30** | **20.89** | **18.95** | **17.86** | **18.71** | **16.12** | **22.88** | **20.76** | **24.99** |
| **Indole_standard deviation** | | **4.26** | **3.57** | **2.39** | **1.77** | **0.61** | **1.69** | **5.11** | **2.78** | **0.94** | **7.47** | **1.60** |
| **Skatole_standard deviation** | | **3.50** | **1.17** | **0.98** | **1.84** | **0.78** | **0.94** | **1.85** | **0.83** | **0.10** | **1.79** | **0.55** |

### (5) Discussion

It was confirmed that the contents of indole or skatole in the extract liquids obtained from the green coffee beans of the Examples processed by 10% by mass or more of water addition, heating and saccharide addition were significantly reduced as compared with the extract liquids obtained from any of the Control Examples and the Comparative Examples.

### Experiment 6 Effect of addition amount of saccharide to green coffee beans

### (1) Roasted coffee beans

### [Samples 6-1 to 6-4]

100 g of Robusta green coffee beans (made in Vietnam) and 40 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

0.7, 1, 3 or 5 g, per 100 g of unprocessed green coffee beans, of glucose was added to the heating-treated green coffee beans, and the mixture was allowed to stand at room temperature for 3 hours for absorption.

Thereafter, the coffee beans were dried until the moisture content reached about a moisture content before processing, and the resulting dried processed green coffee beans were roasted at 235°C until an L value reached 20 using a Gene Cafe (manufactured by Genesis) to afford coffee roasted beans (Samples 6-1 to 6-4 of Robusta made in Vietnam).

### (2) Coffee extract liquid

For Samples 6-1 to 6-4, a coffee extract liquid was prepared as for Controls A and B.

### (3) Measurement of contents of indole and skatole in coffee extract liquids

For Samples 6-1 to 6-4, the contents of indole and skatole were determined as for Controls A and B. The number of data per condition was 3, and an average value was calculated and taken as a quantitative value.

### (4) Evaluation results

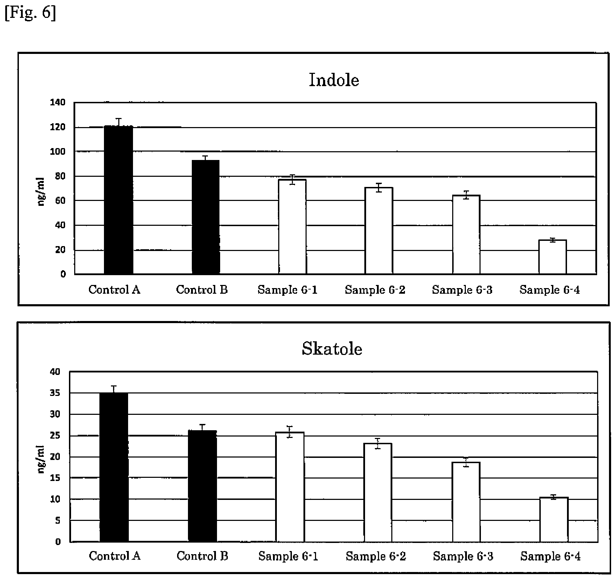

Table 6 summarizes the quantitative values and standard deviations of indole and skatole of respective samples, and Fig. 6 shows a graph comparing the quantitative values of indole (top) and skatole (bottom) of the respective samples.

**[Table 6]**

| | | **Robusta made in Vietnam** | | | | | |
|---|---|---|---|---|---|---|---|
| | | **Control Example** | | **Example** | | | |
| | | **Control A** | **Control B** | **Sample 6-1** | **Sample 6-2** | **Sample 6-3** | **Sample 6-4** |
| **Processing conditions** | **Water addition amount** | **No addition** | **40% by mass** | **40% by mass** | **40% by mass** | ***40%* by mass** | **40% by mass** |
| | **Heating condition** | **No heating** | **90°C, 30 minutes** | **90°C, 30 minutes** | **90°C, 30 minutes** | **90°C, 30 minutes** | **90°C, 30 minutes** |
| | **Component addition amount** | **No addition** | **No addition** | **Glucose 0.7% by mass** | **Glucose 1% by mass** | **Glucose 3% by mass** | **Glucose 10% by mass** |
| **L value** | | **20** | **20** | **20** | **20** | **20** | **20** |
| **Indole_quantitative value (Average, ng/ml)** | | **120.37** | **92.34** | **77.08** | **70.60** | **64.70** | **28.36** |
| **Skatole_quantitative value (Average, ng/ml)** | | **34.92** | **26.25** | **25.85** | **23.12** | **18.71** | **10.54** |
| **Indole_standard deviation** | | **4.26** | **3.57** | **2.76** | **3.05** | **5.11** | **0.79** |
| **Skatole_standard deviation** | | **3.50** | **1.17** | **0.57** | **1.42** | **1.85** | **0.50** |

### (5) Discussion

It was confirmed that the contents of indole or skatole in the extract liquids obtained from the green coffee beans of the Examples processed by water addition, heating and 0.7% by mass or more of saccharide addition were significantly reduced as compared with the extract liquids obtained from either of the Control Examples.

### Experiment 7 Effect of addition of organic acid and saccharide to green coffee beans

### (1) Roasted coffee beans

### [Samples 7-1 to 7-4]

100 g of Robusta green coffee beans (made in Vietnam) and 40 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

0.7 g of lactic acid and 0.7 g of glucose, 1 g of lactic acid and 1 g of glucose, 3 g of lactic acid and 3 g of glucose, or 5 g of lactic acid and 10 g of glucose, per 100 g of unprocessed green coffee beans, were added to the heating-treated green coffee beans, and the mixture was allowed to stand at room temperature for 3 hours for absorption.

Thereafter, the coffee beans were dried until the moisture content reached about a moisture content before processing, and the resulting dried processed green coffee beans were roasted at 235°C until an L value reached 20 using a Gene Cafe (manufactured by Genesis) to afford coffee roasted beans (Samples 7-1 to 7-4 of Robusta made in Vietnam).

### (2) Coffee extract liquid

For Samples 7-1 to 7-4, a coffee extract liquid was prepared as for Controls A and B.

### (3) Measurement of contents of indole and skatole in coffee extract liquids

For Samples 7-1 to 7-4, the contents of indole and skatole were determined as for Controls A and B. The number of data per condition was 3, and an average value was calculated and taken as a quantitative value.

### (4) Evaluation results

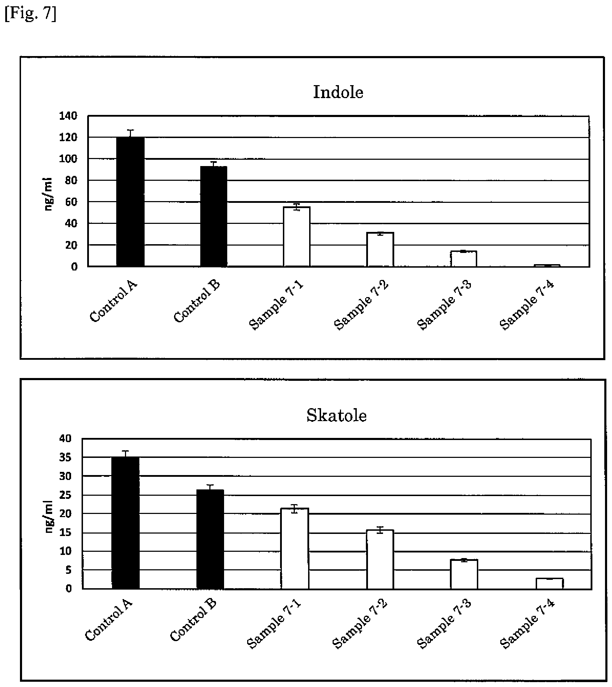

Table 7 summarizes the quantitative values and standard deviations of indole and skatole of respective samples, and Fig. 7 shows a graph comparing the quantitative values of indole (top) and skatole (bottom) of the respective samples.

**[Table 7]**

| | | **Robusta made in Vietnam** | | | | | |
|---|---|---|---|---|---|---|---|
| | | **Control Example** | | **Example** | | | |
| | | **Control A** | **Control B** | **Sample 7-1** | **Sample 7-2** | **Sample 7-3** | **Sample 7-4** |
| **Processing conditions** | **Water addition amount** | **No addition** | **40% by mass** | **40% by mass** | **40% by mass** | **40% by mass** | **40% by mass** |
| | **Heating condition** | **No heating** | **90°C, 30 minutes** | **90°C, 30 minutes** | **90°C, 30 minutes** | **90°C, 30 minutes** | **90°C, 30 minutes** |
| | **Component addition amount** | **No addition** | **No addition** | **Glucose 0.7% by mass** | **Glucose 1% by mass** | **Glucose 3% by mass** | **Glucose 10% by mass** |
| | | **No addition** | **No addition** | **Lactic acid 0.7% by mass** | **Lactic acid 1% by mass** | **Lactic acid 3% by mass** | **Lactic acid 5% by mass** |
| **L value** | | **20** | **20** | **20** | **20** | **20** | **20** |
| **Indole_quantitative value (Average, ng/ml)** | | **120.37** | **92.34** | **55.18** | **31.54** | **14.52** | **2.34** |
| **Skatole_quantitative value (Average, ng/ml)** | | **34.92** | **26.25** | **21.50** | **15.60** | **7.77** | **2.83** |
| **Indole_standard deviation** | | **4.26** | **3.57** | **1.78** | **0.96** | **0.43** | **0.29** |
| **Skatole_standard deviation** | | **3.50** | **1.17** | **1.25** | **0.49** | **0.45** | **0.12** |

### (5) Discussion

It was confirmed that the contents of indole or skatole in the extract liquids obtained from the green coffee beans of the Examples processed by water addition, heating, and addition of an organic acid and a saccharide were significantly reduced as compared with the extract liquids obtained from either of the Control Examples.

### Experiment 8 Effect of amount of water addition to green coffee beans

### (1) Roasted coffee beans

### [Sample 8-1]

100 g of Robusta green coffee beans (made in Vietnam) was put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform heating processing.

3 g of an organic acid mixed liquid (lactic acid : acetic acid : citric acid = 4 : 1 : 1 in mass ratio) and 3 g of glucose, per 100 g of unprocessed green coffee beans, were added to the heating-treated green coffee beans, and the mixture was allowed to stand at room temperature for 3 hours for absorption.

Thereafter, the coffee beans were dried until the moisture content reached about a moisture content before processing, and the resulting dried green coffee beans were roasted at 235°C until an L value reached 20 using a Gene Cafe (manufactured by Genesis) to afford coffee roasted beans (Sample 8-1 of Robusta made in Vietnam).

### [Samples 8-2 to 8-8]

100 g of Robusta green coffee beans (made in Vietnam) and 10 g, 20 g, 30 g, 40 g, 50 g, 60 g or 100 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

Coffee roasted beans (Samples 8-2 to 8-8 of Robusta made in Vietnam) were obtained by the same procedure as in Sample 8-1 except for the above.

### [Sample 8-9]

100 g of Robusta green coffee beans (made in Vietnam) and 40 g of water at room temperature were put into a heat-resistant vessel, and then coffee roasted beans (Sample 8-9 of Robusta made in Vietnam) were obtained by the same procedure as in Sample 8-1 except that a heating treatment was not performed.

### (2) Coffee extract liquid

For Samples 8-1 to 8-9, a coffee extract liquid was prepared as for Controls A and B.

### (3) Measurement of contents of indole and skatole in coffee extract liquids

For Samples 8-1 to 8-9, the contents of indole and skatole were determined as for Controls A and B. The number of data per condition was 3, and an average value was calculated and taken as a quantitative value.

### (4) Measurement results

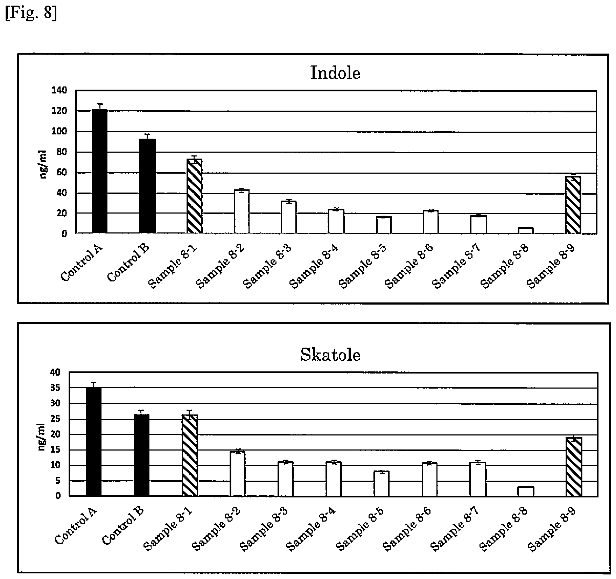

Table 8 summarizes the quantitative values and standard deviations of indole and skatole of respective samples, and Fig. 8 shows a graph comparing the quantitative values of indole (top) and skatole (bottom) of the respective samples.

**[Table 8]**

| | | **Robusta made In Vietnam** | | | | | | | | | | |
|---|---|---|---|---|---|---|---|---|---|---|---|---|
| | | **Control Example** | | **Comparative Example** | **Example** | | | | | | | **Comparative Example** |
| | | **Control A** | **Control B** | **Sample 8-1** | **Sample 8-2** | **Sample 8-3** | **Sample 8-4** | **Sample 8-5** | **Sample 8-6** | **Sample 8-7** | **Sample 8-8** | **Sample 8-9** |
| **Processing conditions** | **Water addition amount** | **No addition** | **40% by mass** | **No treatment** | **10% by mass** | **20% by mass** | **30% by mass** | **40% by mass** | **50% by mass** | **60% by mass** | **100% by mass** | **40% by mass** |
| | **Heating condition** | **No heating** | **90°C, 30 minutes** | **90°C, 30 minutes** | **90°C, 30 minutes** | **90°C, 30 minutes** | **90°C, 30 minutes** | **90°C, 30 minutes** | **90°C, 30 minutes** | **90°C, 30 minutes** | **90°C, 30 minutes** | **No heating** |
| | **Component addition amount** | **No addition** | **No addition** | **Glucose 3% by mass** | **Glucose 3% by mass** | **Glucose 3% by mass** | **Glucose 3% by mass** | **Glucose 3% by mass** | **Glucose 3% by mass** | **Glucose 3% by mass** | **Glucose 3% by mass** | **Glucose 3% by mass** |
| | | **No addition** | **No addition** | **Organic acid mixed liquid 3% by mass** | **Organic acid mixed liquid 3% by mass** | **Organic acid mixed liquid 3% by mass** | **Organic acid mixed liquid 3% by mass** | **Organic acid mixed liquid 3% by mass** | **Organic acid mixed liquid 3% by mass** | **Organic acid mixed liquid 3% by mass** | **Organic acid mixed liquid 3% by mass** | **Organic acid mixed liquid 3% by mass** |
| **L value** | | **20** | **20** | **20** | **20** | **20** | **20** | **20** | **20** | **20** | **20** | **20** |
| **Indole_quantitative value (Average, ng/ml)** | | **120.37** | **92.34** | **72.73** | **42.71** | **32.1** | **24.16** | **16.86** | **22.96** | **18.24** | **6.34** | **55.99** |
| **Skatole_quantitative value (Average, ng/ml)** | | **34.92** | **26.25** | **26.32** | **14.41** | **11.04** | **11.03** | **7.91** | **10.86** | **11.11** | **3.03** | **19.03** |
| **Indole_standard deviation** | | ***4.26*** | **3.57** | **2.07** | **5.21** | **1.97** | **2.79** | **0.54** | **1.82** | **0.34** | **0.34** | **1.42** |
| **Skatole_standard deviation** | | **3.50** | **1.17** | **0.71** | **1.62** | **0.69** | **0.32** | **0.09** | **0.41** | **0.78** | **0.24** | **0.62** |

### (5) Discussion

It was confirmed that the contents of indole or skatole in the extract liquids obtained from the green coffee beans of the Examples processed by 10% by mass or more of water addition, heating, and addition of an organic acid and a saccharide were significantly reduced as compared with the extract liquids obtained from any of the Control Examples and the Comparative Examples.

### Experiment 9 Effect of addition of organic acid and saccharide to green coffee beans

### (1) Roasted coffee beans

### [Control C]

100 g of Robusta green coffee beans (made in Uganda) were roasted at 235°C until an L value reached 20 using a Gene Cafe (manufactured by Genesis) to afford coffee roasted beans (Control C of Robusta made in Uganda).

### [Sample 9-1]

100 g of Robusta green coffee beans (made in Uganda) and 40 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

3 g of an organic acid mixed liquid (lactic acid : acetic acid : citric acid = 4 : 1 : 1 in mass ratio) and 3 g of glucose, per 100 g of unprocessed green coffee beans, were added to the heating-treated green coffee beans, and the mixture was allowed to stand at room temperature for 3 hours for absorption.

Thereafter, the coffee beans were dried until the moisture content reached about a moisture content before processing, and the resulting dried processed green coffee beans were roasted at 235°C until an L value reached 20 using a Gene Cafe (manufactured by Genesis) to afford coffee roasted beans (Sample 9-1 of Robusta made in Uganda).

### [Control D]

100 g of Robusta green coffee beans (made in Indonesia) were roasted at 235°C until an L value reached 20 using a Gene Cafe (manufactured by Genesis) to afford coffee roasted beans (Control D of Robusta made in Indonesia).

### [Sample 9-2]

100 g of Robusta green coffee beans (made in Indonesia) and 40 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

3 g of an organic acid mixed liquid (lactic acid : acetic acid : citric acid = 4 : 1 : 1 in mass ratio) and 3 g of glucose, per 100 g of unprocessed green coffee beans, were added to the heating-treated green coffee beans, and the mixture was allowed to stand at room temperature for 3 hours for absorption.

Thereafter, the coffee beans were dried until the moisture content reached about a moisture content before processing, and the resulting dried processed green coffee beans were roasted at 235°C until an L value reached 20 using a Gene Cafe (manufactured by Genesis) to afford coffee roasted beans (Sample 9-2 of Robusta made in Indonesia).

### (2) Coffee extract liquid

For Control C, Sample 9-1, Control D, and Sample 9-2, coffee roasted beans were ground to fine grinding with a corn grinder (De'Longhi S.p.A) to afford a roasted bean powder. 180 mL of hot water was poured into 10 g of the roasted bean powder, the mixture was held for 4 minutes, and then the whole mixture was stirred to remove bubbles remaining on a surface. Thereafter, the mixture was held until a time of 12 minutes lapsed from the pour of the hot water (namely, an extraction time was set to 12 minutes), and then a supernatant after the roasting bean powder was naturally precipitated was collected as a coffee extract liquid.

### (3) Measurement of contents of indole and skatole in coffee extract liquids

3-Methyl-1H-indole-d8 (available from Toronto Research Chemicals Inc.) was dissolved in a 50 vol% aqueous methanol solution such that a concentration of 100 ng/mL was attained, and afforded an internal standard solution. 25 µL of this internal standard solution, 400 µL of a 50 vol% aqueous methanol solution, and 100 µL of each coffee extract liquid were mixed, and then filtered through a PTFE filter having a pore size of 0.2 µm, and the filtrate was used as an analysis sample. The analysis sample was measured for the contents of indole and skatole according to the following LC-MS/MS conditions. The number of data per condition was 3, and an average value was calculated and taken as a quantitative value.

### (4) Measurement results

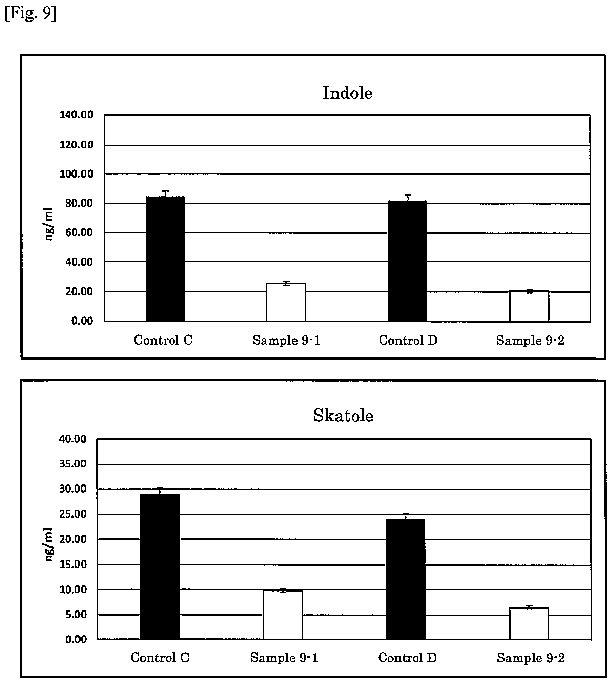

Table 9 summarizes the quantitative values and standard deviations of indole and skatole of respective samples, and Fig. 9 shows a graph comparing the quantitative values of indole (top) and skatole (bottom) of the respective samples.

**[Table 9]**

| | | **Robusta made in Uganda** | | **Robusta made in Indonesia** | |
|---|---|---|---|---|---|
| | | **Control Example** | **Example** | **Control Example** | **Example** |
| | | **Control C** | **Sample 9-1** | **Control D** | **Sample 9-2** |
| **Processing conditions** | **Water addition amount** | **No addition** | **40% by mass** | **No addition** | **40% by mass** |
| | **Heating condition** | **No heating** | **90°C, 30 minutes** | **No heating** | **90°C, 30 minutes** |
| | **Component addition amount** | **No addition** | **Glucose 3% by mass** | **No addition** | **Glucose 3% by mass** |
| | | **No addition** | **Organic acid mixed liquid 3% by mass** | **No addition** | **Organic acid mixed liquid 3% by mass** |
| **L value** | | **20** | **20** | **20** | **20** |
| **Indole_quantitative value (Average, ng/ml)** | | **84.07** | **25.56** | **81.70** | **20.36** |
| **Skatole_quantitative value (Average, ng/ml)** | | **28.74** | **9.86** | **23.94** | **6.45** |
| **Indole_standard deviation** | | **2.89** | **1.66** | **6.12** | **0.63** |
| **Skatole_standard deviation** | | **1.84** | **0.46** | **1.94** | **0.45** |

### (5) Discussion

It was confirmed that the contents of indole or skatole in the extract liquids obtained from the green coffee beans of the Examples processed by water addition, heating, and addition of an organic acid and a saccharide were significantly reduced as compared with the extract liquids obtained from either of the Control Examples regardless of the place of production of the coffee beans.

### Experiment 10 Effect of addition of organic acid and saccharide to green coffee beans

### (1) Roasted coffee beans

### [Control E]

100 g of Arabica green coffee beans (made in Brazil) were roasted at 235°C until an L value reached 20 using a Gene Cafe (manufactured by Genesis) to afford coffee roasted beans (Control E of Arabica made in Brazil).

### [Sample 10-1]

100 g of Arabica green coffee beans (made in Brazil) and 40 g of water at room temperature were put into a heat-resistant vessel, the vessel was covered with an aluminum foil so that moisture did not escape, the heat-resistant vessel was placed in an autoclave (LSX500, available from TOMY SEIKO CO., LTD.), the temperature of the heat-resistant vessel was raised from room temperature to 90°C, and the heat-resistant vessel was held at this temperature for 30 minutes to perform a heating treatment.

3 g of an organic acid mixed liquid (lactic acid : acetic acid : citric acid = 4 : 1 : 1 in mass ratio) and 3 g of glucose, per 100 g of unprocessed green coffee beans, were added to the heating-treated green coffee beans, and the mixture was allowed to stand at room temperature for 3 hours for absorption.

Thereafter, the coffee beans were dried until the moisture content reached about a moisture content before processing, and the resulting dried processed green coffee beans were roasted at 235°C until an L value reached 20 using a Gene Cafe (manufactured by Genesis) to afford coffee roasted beans (Sample 10-1 of Arabica made in Brazil).

### [Sample 10-2]

100 g of Arabica green coffee beans (made in Brazil) were put into a heat-resistant vessel, and then coffee roasted beans (Sample 10-2 of Arabica made in Brazil) were obtained by the same procedure as in Sample 10-1 except that water was not put.

### [Sample 10-3]

100 g of Arabica green coffee beans (made in Brazil) and 40 g of water at room temperature were put into a heat-resistant vessel, and then coffee roasted beans (Sample 10-3 of Arabica made in Brazil) were obtained by the same procedure as in Sample 10-1 except that the heating treatment was not performed.

### [Sample 10-4]

Coffee roasted beans (Sample 10-4 of Arabica made in Brazil) were obtained by the same procedure as in Sample 10-1 except that neither the organic acid nor the saccharide was added to the heating-treated green coffee beans.

### (2) Coffee extract liquid

For Control E and Samples 10-1 to 10-4, coffee roasted beans was ground to fine grinding with a corn grinder (De'Longhi S.p.A) to afford a roasted bean powder. 180 mL of hot water was poured into 10 g of the roasted bean powder, the mixture was held for 4 minutes, and then the whole mixture was stirred to remove bubbles remaining on a surface. Thereafter, the mixture was held until a time of 12 minutes lapsed from the pour of the hot water (namely, an extraction time was set to 12 minutes), and then a supernatant after the roasting bean powder was naturally precipitated was collected as a coffee extract liquid.

### (3) Measurement of contents of indole and skatole in coffee extract liquids

3-Methyl-1H-indole-d8 (available from Toronto Research Chemicals Inc.) was dissolved in a 50 vol% aqueous methanol solution such that a concentration of 100 ng/mL was attained, and afforded an internal standard solution. 25 µL of this internal standard solution, 400 µL of a 50 vol% aqueous methanol solution, and 100 µL of each coffee extract liquid were mixed, and then filtered through a PTFE filter having a pore size of 0.2 µm, and the filtrate was used as an analysis sample. The analysis sample was measured for the contents of indole and skatole according to the following LC-MS/MS conditions. The number of data per condition was 3, and an average value was calculated and taken as a quantitative value.

### (4) Measurement results

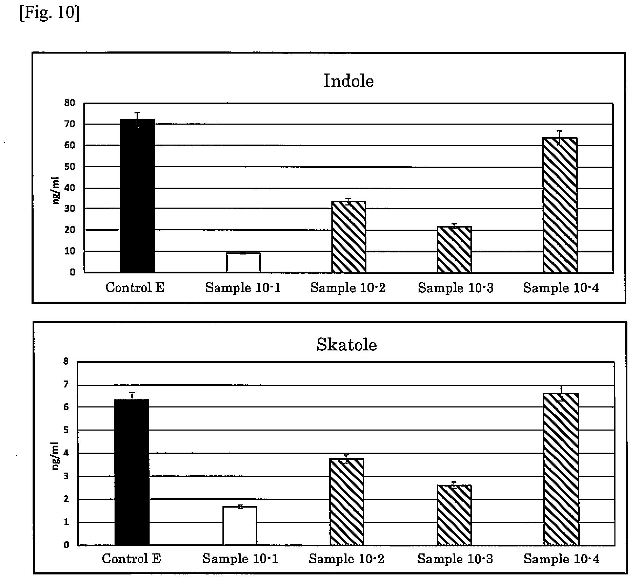

Table 10 summarizes the quantitative values and standard deviations of indole and skatole of respective samples, and Fig. 10 shows a graph comparing the quantitative values of indole (top) and skatole (bottom) of the respective samples.

**[Table 10]**

| | | **Arabica made in Brazil** | | | | |
|---|---|---|---|---|---|---|
| | | **Control Example** | **Example** | **Comparative Example** | | |
| | | **Control E** | **Sample 10-1** | **Sample 10-2** | **Sample 10-3** | **Sample 10-4** |
| **Processing conditions** | **Water addition amount** | **No addition** | **40% by mass** | **No addition** | **40% by mass** | **40% by mass** |
| | **Heating condition** | **No heating** | **90°C, 30 minutes** | **90°C, 30 minutes** | **No heating** | **90°C, 30 minutes** |
| | **Component addition amount** | **No addition** | **Glucose 3% by mass** | **Glucose 3% by mass** | **Glucose 3% by mass** | **No addition** |
| | | **No addition** | **Organic acid mixed liquid 3% by mass** | **Organic acid mixed liquid 3% by mass** | **Organic acid mixed liquid 3% by mass** | **No addition** |
| **L value** | | **20** | **20** | **20** | **20** | **20** |
| **Indole_quantitative value (Average, ng/ml)** | | **71.98** | **8.98** | **33.47** | **21.82** | **63.78** |
| **Skatole_quantitative value (Average, ng/ml)** | | **6.33** | **1.67** | **3.74** | **2.60** | **6.61** |
| **Indole_standard deviation** | | **0.83** | **0.90** | **1.56** | **1.09** | **5.34** |
| **Skatole_standard deviation** | | **0.15** | **0.07** | **0.09** | **0.13** | **0.61** |

### (5) Discussion

It was confirmed that the contents of indole or skatole in the extract liquids obtained from the green coffee beans of the Example processed by water addition, heating, and addition of an organic acid and a saccharide were significantly reduced as compared with the extract liquids obtained from any of the Control Examples and the Comparative Examples regardless of the variety of the coffee beans.

### Experiment 11 Effect of Presence or Absence of Drying after Causing Organic Acid and Saccharide to Be Absorbed into Green Coffee Beans

### (1) Roasted coffee beans

### [Sample 11]

### (1) Roasted coffee beans

An organic acid mixed liquid (lactic acid : acetic acid : citric acid = 4 : 1 : 1 in mass ratio) and glucose were added to heating-treated green coffee beans, the mixture was allowed to stand at room temperature for 3 hours for absorption, and then coffee roasted beans (Sample 11 of Robusta made in Vietnam) were obtained by the same procedure as in Sample 8-5 except that drying was not performed.

### (2) Coffee extract liquid

For Sample 11, a coffee extract liquid was prepared as for Controls A and B.

### (3) Measurement of contents of indole and skatole in coffee extract liquids

For Sample 11, the contents of indole and skatole were determined as for Controls A and B. The number of data per condition was 3, and an average value was calculated and taken as a quantitative value.

### (4) Measurement results

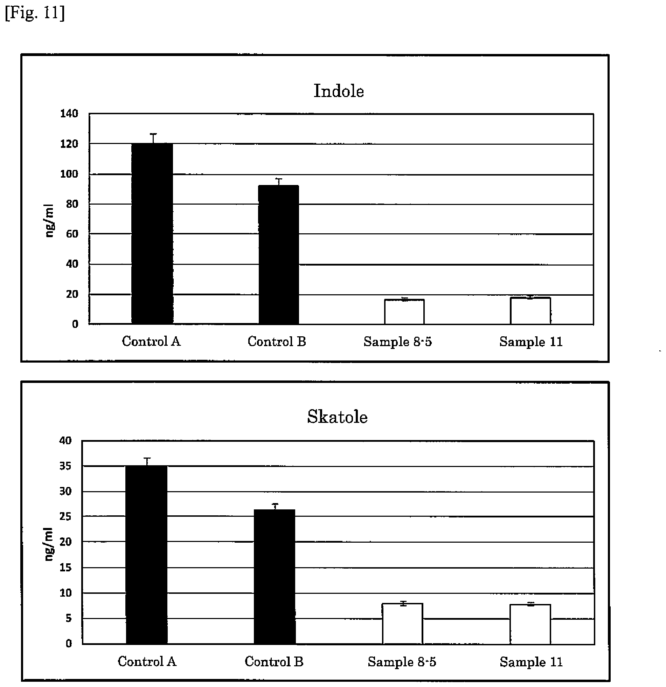

Table 11 summarizes the quantitative values and standard deviations of indole and skatole of respective samples, and Fig. 11 shows a graph comparing the quantitative values of indole (top) and skatole (bottom) of the respective samples.

**[Table 11]**

| | | **Robusta made in Vietnam** | | | |
|---|---|---|---|---|---|
| | | **Control Example** | | **Example** | |
| | | **Control A** | **Control B** | **Sample 8-5** | **Sample 11** |
| **Processing conditions** | **Water addition amount** | **No addition** | **40% by mass** | **40% by mass** | **40% by mass** |
| | **Heating condition** | **No heating** | **90°C, 30 minutes** | **90°C, 30 minutes** | **90°C, 30 minutes** |
| | **Component addition amount** | **No addition** | **No addition** | **Glucose 3% by mass** | **Glucose 3% by mass** |
| | | **No addition** | **No addition** | **Organic acid mixed liquid 3% by mass** | **Organic acid mixed liquid 3% by mass** |
| | **Drying step** | **Absent** | **Present** | **Present** | **Absent** |
| **L value** | | **20** | **20** | **20** | **20** |
| **Indole_quantitative value (Average, ng/ml)** | | **120.37** | **92.34** | **16.86** | **18.13** |
| **Skatole _ quantitative value (Average, ng/ml)** | | **34.92** | **26.25** | **7.91** | **7.87** |
| **Indole_standard deviation** | | **4.26** | **3.57** | **0.54** | **0.43** |
| **Skatole_standard deviation** | | **3.50** | **1.17** | **0.09** | **0.46** |

### (5) Discussion

It was confirmed that the contents of indole or skatole in the extract liquids obtained from the green coffee beans of the Examples processed by water addition, heating, and addition of an organic acid and a saccharide were significantly reduced as compared with the extract liquids obtained from either of the Control Examples regardless of the presence or absence of drying after absorption of the organic acid and the saccharide.

### [Measurement Method]

### <LC-MS/MS conditions>

A quantitative method was established in multiple reaction monitoring mode using 3-methyl-1H-indole-d8 as an internal standard. Each of indole (available from Nacalai Tesque, Inc.) and skatole (available from Tokyo Chemical Industry Co., Ltd.) was diluted with a 50 vol% aqueous methanol solution to prepare a calibration curve of each compound. Thereafter, the concentrations of the compounds contained in the coffee extract liquid samples pretreated by the above method were quantified.

Specifically, as a column, Shim-pack Scepter C18-120 (1.9 µm, 2.1 mm × 50 mm) manufactured by Shimadzu Corporation was used. As equipment for LC-MS/MS, a Nextera HPLC system (communication bus module: CBM-20A; pump: LC-30AD; autosampler: SIL-30AC; degasser: DGU-20A5R; column oven: CTO-20AC) manufactured by Shimadzu Corporation was used as a high performance liquid chromatography (HPLC) system, and Sciex Triple quad 6500+ manufactured by AB SCIEX was used as a tandem mass spectrometry (MS/MS) system. A 0.05 vol% aqueous formic acid solution was used for a mobile phase A, 100 vol% methanol was used for a mobile phase B, the flow rate was set to 0.2 mL/min, and the column temperature was set to 40°C. An initial concentration was set to a "a volume ratio of mobile phase A : B = 45 : 55", and it was maintained under the same condition for 5 minutes, and after 0.1 minutes, adjusted to "the volume ratio of mobile phase A: B = 0 : 100", and then maintained under the same condition for 2 minutes. The injection amount into HPLC was set to 2 µL.

As to MS conditions, the ionization was performed in APCI positive mode. The following six items of the MS conditions, namely, curtain gas, collision activated dissociation gas, ion spray voltage floating, temperature, ion source gas 1 and entrance potential are parameters common to the compounds, and are summarized in Table 12. The following six items of the MS conditions, namely, declustering potential, collision energy, collision cell exit potential, elution time, precursor ion and product ion are parameters set compound by compound, and are summarized in Table 13.

**[Table 12]**

| **Curtain gas (psi)** | **Collision activated dissociation gas (psi)** | **Ion spray voltage floating (volt)** | **Temperature (°C)** | **Ion source gas 1 (psi)** | **Entrance potential (volt)** |
|---|---|---|---|---|---|
| **40** | **12** | **5500** | **400** | **40** | **10** |

**[Table 13]**

| | **Declustering potential (volt)** | **Collision energy (volt)** | **Collision cell exit potential (volt)** | **Elution time (minutes)** | **Precursor ion (m/z)** | **Product ion (m/z)** |
|---|---|---|---|---|---|---|
| **3-Methyl-1H-indole-d8** | **86** | **33** | **8** | **3.35** | **140.30** | **122.20** |
| **Indole** | **76** | **31** | **12** | **2.00** | **118.20** | **91.10** |
| **Skatole** | **56** | **31** | **16** | **3.50** | **132.25** | **117.15** |

### <Method for measuring L value>

The L value was measured with a color difference meter Color meter ZE6000 manufactured by Nippon Denshoku Industries Co., Ltd. Specifically, 10 g of coffee roasted beans were finely ground with a corn grinder (De'Longhi S.p.A), the powder obtained was put in an attached round cell and pressed, and an L value in a reflection mode of the color difference meter was measured.

### Industrial Applicability

In the prior art, it is necessary to heat treat green coffee beans at a high temperature of 100°C or higher, and therefore a high-pressure heating facility is required. However, according to the method for reducing indole and skatole in roasted coffee beans according to the present invention, it is possible to inhibit formation of specific unpleasant odor components (indole and skatole) generated in the coffee roasted beans in a short time under a heating condition of lower than 100°C. Thus, the method for producing roasted coffee beans according to the present invention employs the above reducing method, and it is possible to produce roasted coffee beans in which the contents of indole and skatole, which are unpleasant odor components, are significantly reduced in a simple facility.

## Claims

1. A production method for producing roasted coffee beans, the method comprising:
(1) a step of adding 10% by mass or more of moisture to green coffee beans;
(2) a step of, after the step of adding the moisture, heating the green coffee beans and the moisture to a temperature lower than 100°C under atmospheric pressure to impregnate the green coffee beans with the moisture;
(3) a step of, after the step of impregnating the green coffee beans with the moisture, causing an organic acid and/or a saccharide to be absorbed to the green coffee beans impregnated with the moisture; and
(4) a step of, after the step of causing the organic acid and/or the saccharide to be absorbed, roasting the green coffee beans having absorbed the organic acid and/or the saccharide.

2. The production method according to claim 1, wherein in the step of causing the organic acid and/or the saccharide to be absorbed, the green coffee beans impregnated with the moisture are impregnated with an aqueous solution containing the organic acid and/or the saccharide.

3. The production method according to claim 1 or 2, wherein the organic acid is at least one selected from the group consisting of lactic acid, citric acid and acetic acid, and the saccharide is at least one selected from the group consisting of glucose, fructose, and maltose.

4. The production method according to any one of claims 1 to 3, wherein 0.5% by mass or more of the organic acid or the saccharide with respect to the green coffee beans is caused to be absorbed.

5. The production method according to any one of claims 1 to 4, wherein the green coffee beans are Robusta.

6. Roasted coffee beans produced by the production method according to any one of claims 1 to 5.

7. A food or beverage comprising the roasted coffee beans according to claim 6 or an extract thereof.

8. A method for reducing indole and skatole in roasted coffee beans, the method comprising:
(1) a step of adding 10% by mass or more of moisture to green coffee beans;
(2) a step of, after the step of adding the moisture, heating the green coffee beans and the moisture to a temperature lower than 100°C under atmospheric pressure to impregnate the green coffee beans with the moisture;
(3) a step of, after the step of impregnating the green coffee beans with the moisture, causing an organic acid and/or a saccharide to be absorbed to the green coffee beans impregnated with the moisture; and
(4) a step of, after the step of causing the organic acid and/or the saccharide to be absorbed, roasting the green coffee beans having absorbed the organic acid and/or the saccharide.
